# EUROPEAN PATENT SPECIFICATION

(11) **EP 2 513 450 B1**
(45) Date of publication and mention of the grant of the patent: **19.11.2014**
(21) Application number: 10805433.9
(22) Date of filing: 16.12.2010
(51) Int. Cl.: F02B 29/04, F02M 25/03

(54) **PISTON ENGINE**
KOLBENBRENNKRAFMASCHINE
MOTEUR À PISTON

(30) Priority: 18.12.2009 FI 20096353
(43) Date of publication of application: 24.10.2012
(73) Proprietor: Wärtsilä Finland Oy, 65380 Vaasa (FI)
(72) Inventor: LIAVÅG, Lars Ola, FI-652300 Vasa (FI)
(74) Representative: Berggren Oy Ab
(86) International application number: PCT/FI2010/051047
(87) International publication number: WO 2011/073529

(56) References cited:
- WO-A1-2007/031599
- DE-A1- 2 446 490
- GB-A- 1 258 261
- JP-A- 7 189 715
- US-A- 3 832 985

## Description

The invention relates to a piston engine.

Nitrogen oxides (NOx) are formed in high combustion temperatures in cylinders of a piston engine and conveyed into the atmosphere with the exhaust gases. Because of the negative environmental effects of the nitrogen oxide emissions, efforts have been made to minimise them. Adding water to the combustion air reduces the nitrogen oxide emissions. Water reduces the combustion temperature in the cylinder, whereby the amount of nitrogen oxides formed is reduced. In practice, adding water to the combustion process of a piston engine is carried out in two alternative ways: water can be injected either directly into the cylinders or it can be mixed with the combustion air prior to introducing it into the cylinders.

As water is mixed with the combustion air prior to introducing to cylinders, a liquid water film may form on the inner surface of the intake air duct and other surfaces being in contact with the intake air due to the impingement of liquid droplets on these surfaces. This film is subsequently transported by aerodynamic forces in the downstream direction and the water contained therein may therefore spread to large parts of the intake air duct and into the charge air cooler, giving rise to corrosion and other, related problems. For example, the intake air flow can release large water drops from the water film, which drops may subsequently impact onto the surfaces of the charge air cooler or other components and thus cause damages.

Document US-A-3.332.985 discloses a piston engine, in which an intake air duct is provided with a liquid removal means for removing liquid from an inner surface of the intake air duct. This subject matter is also disclosed by documents GB-A-1.258.261 and DE A-24.46.490. US-A-6.145.498 discloses the preamble of claim 1.

The object of the present invention is to reduce the above problems.

The object of the invention is met as is disclosed in claim 1. A piston engine according to the invention comprises an intake air duct for conducting intake air into cylinders of the engine. The intake air duct is provided with liquid removal means for removing liquid from an inner surface of the intake air duct. Additionally, a charge air cooler Is connected to the intake air duct and the liquid removal means are arranged before the charge air cooler in the flow direction of the intake air.

Significant benefits can be achieved by means of the invention. A liquid film collected on the inner surface of the intake air duct can be removed by the liquid removal means. As a result, the amount of liquid on the intake air duct inner surface is reduced as well as corrosion and other problems caused by the liquid.

In the following the invention is be described, by way of example, with reference to the accompanying drawings, in which
Figure 1 is a schematic view of a piston engine.
Figure 2 is a cross sectional view of the partial enlargement A of fig. 1.

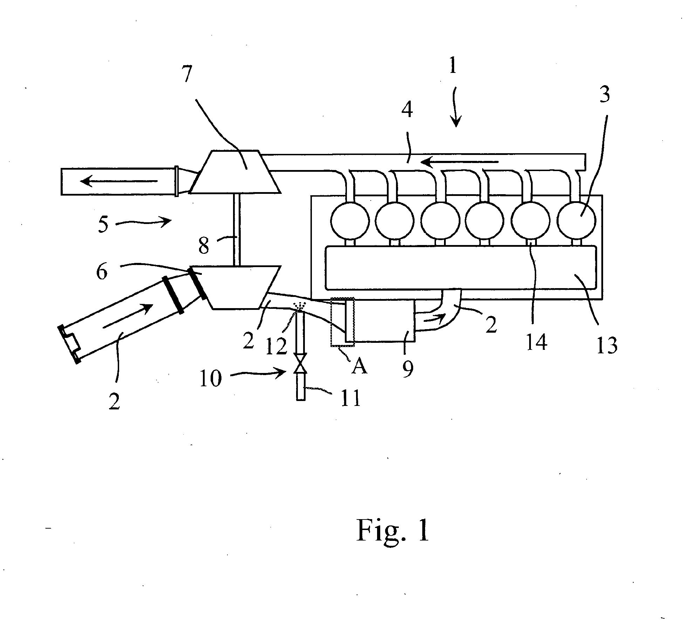

Figure 1 is a schematic view of a large piston engine 1. Large piston engine refers here to such engines that can be used for instance as main and auxiliary engines in ships or in power plants for production of heat and/or electricity. The engine 1 comprises an intake air duct 2 for conducting intake air into cylinders 3 of the engine. The engine 1 comprises an exhaust gas duct 4 through which exhaust gas is discharged from the cylinders 3. Further, the engine 1 comprises a turbocharger 5 provided with a compressor 6 and a turbine 7. The compressor 6 and the turbine 7 are connected to each other via a drive shaft 8. The compressor 6 is connected to the intake air duct 2. The turbine 7 is connected to the exhaust gas duct 4. A charge air cooler 9 is connected to the intake air duct 2 downstream of the compressor 6. The charge air cooler 9 is arranged to cool the intake air pressurized by the compressor 6. A generator (not shown) can be connected to the engine 1.

The intake air duct 2 is provided with liquid feeding means 10 for feeding liquid, e.g. water, into the intake air duct 2. The liquid feeding means 10 are arranged to feed liquid into intake air duct 2 at a location after the compressor 6 but before the charge air cooler 9 in the flow direction of the intake air. By feeding liquid into intake air duct 2, the moisture content of the intake air can be increased. Moistening the intake air reduces the amount of nitrogen oxides (NOx) formed in the combustion in the cylinders 3. Liquid is mixed with the combustion air in the intake air duct 2 before introducing the intake air into the charge air cooler 9. The liquid feeding means 10 comprise a feed tube 11 connected to a Liquid source. Nozzles 12 opening into the Intake air duct 2 are connected to the feed tube 12. From the nozzles 12 Liquid is introduced in drop or mist form into the intake air duct 2.

The intake air duct 2 comprises a charge air receiver 13, which is arranged downstream of the charge air cooler 9. The intake air duct 2 also comprises inlet channels 14 arranged between each cylinder 3 and the charge air receiver 13 for introducing combustion air from the charge air receiver 13 to the cylinders 3.

The intake air duct 2 is provided with liquid removal means for removing a liquid film from the inner surface 19 of the intake duct 2. Liquid film may form on the Inner surface(s) of the intake air duct due to the impingement of liquid droplets on the surface(s). The droplets may originate from liquid fed by the liquid feeding means 10 and/or humidity in ambient air. The liquid film is transported by aerodynamic forces in the downstream direction and the liquid may spread onto large areas of the intake air duct surfaces.

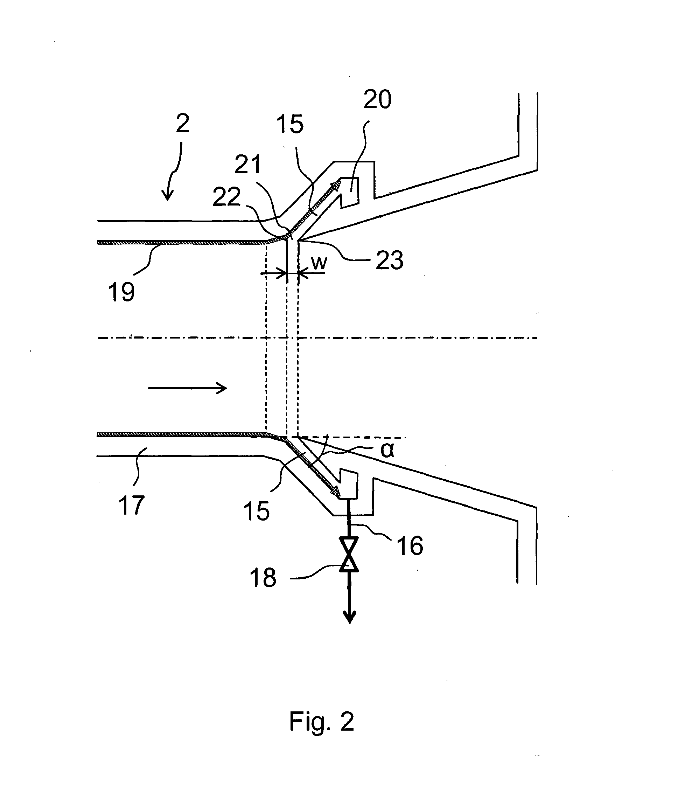

According to an embodiment shown in fig. 2 the invention the liquid removal means comprise a slot 15 arranged in a wall 17 of the intake air duct 2. The slot 15 opens Into the intake air duct 2. The slot 15 is arranged after the liquid feeding means 10 in the flow direction of the intake air. A drain 16 is connected to the slot 15. Liquid can be removed from the slot 15 through the drain 16. The drain 16 arranged at the lowest part of the slot 15. The drain 16 comprises a valve 18, e.g. a float controlled valve, which Is arranged to open as the liquid level in the slot 15 or in the drain 16 rises over a predetermined level.

The slot 15 is elongated in the transverse direction of the intake air duct 2. The slot 15 can extend around the entire perimeter of the intake air duct 2. Alternatively, the slot 15 can extent around only a portion of the perimeter of the slot 15. The slot 15 extends away from the inner surface 19. The slot 15 extends away from the inner surface 19 at an angle (α) of at most 85°, typically at an angle of 5 - 70°. The width (w) of the slot 15 depends on the volume and thickness of the liquid film to be removed as well as flow conditions of the intake air in the intake air duct 2. Typically, the thickness of the liquid film is at most 2.4 mm. The width (w) is at least 3 mm, typically 1 - 5 cm. The bottom of the slot 15 comprises a settling chamber 20 through which liquid to be collected flows to the lowest part of the slot 15.

The opening 21 of the slot 15 is arranged on the inner surface 19 of the intake air duct 2. The opening 21 of the slot comprises a front edge 22 and a rear edge 23. The rear edge 23 is located downstream from the front edge 22. The Inner diameter of the intake air duct 2 at the location of the rear edge 23 is equal or larger than that at the location of the front edge 22.

When the engine 1 is running, intake air is conducted to the compressor 6, by which its pressure is raised to about 4 bar. Thereafter, the moisture content of the intake air is increased by feeding liquid into the intake air duct 2. Then, the liquid fim formed on the inner surface 19 of the intake air duct 2 is removed by the liquid removal means. When the liquid removal means comprise the slot 15, the aerodynamic forces caused by the intake air flow urge liquid from the liquid film into the slot 15. In the slot 15 liquid flows to the settling chamber 20. Liquid flows through the settling chamber 20 to the lowest part of the slot 15. As the liquid level In the slot 15 or drain 16 rises over a predetermined level, the valve 18 opens and liquid flows out of the slot 15 through the drain 16.

Thereafter, the intake air is led to the charge air cooler 9 and cooled by the cooler 9. Cooled intake air is led to the charge air receiver 13. From the charge air receiver 13 the intake air is directed along inlet channels 14 into cylinders 3. Fuel is combusted with intake air in the cylinders 3. The exhaust gas formed in the combustion is directed along the exhaust gas duct 4 to the turbine 4. As the flow traverses the turbine 4, it rotates the rotor of the turbine 4, the rotation of which is transmitted via drive shaft 8 to the rotor of the compressor 3. The flow directions of the intake air and the exhaust gas are shown by arrows in the drawings.

## Claims

1. A piston engine (1) comprising an intake air duct (2) for conducting intake air into cylinders (3) of the engine (1), a charge air cooler (9) connected to the intake air duct (2), which intake air duct (2) is provided with liquid removal means (15) for removing liquid from an inner surface (19) of the intake air duct (2), and which liquid removal means (15) are arranged before the charge air cooler (9) in the flow direction of the intake air, **characterised in that**
- the liquid removal means comprise a slot (15) arranged in a wall (17) of the intake air duct (2),
- a drain (16) is connected to the slot (15), through which drain (16) the liquid can be removed from the slot (15), and
- the drain (16) comprises a valve (18), which is arranged to open as the liquid level in the slot (15) or in the drain (16) rises over a predetermined level.

2. The piston engine (1) according to any of claims 1, **characterised in that** the slot (15) is elongated in the transverse direction of the intake air duct (2).

3. The piston engine (1) according to any of claims 1 or 2, **characterised in that** the slot (16) extends around the entire perimeter of the intake air duct (2).

4. The piston engine (1) according to any of the preceding claims, **characterised in that** the slot (15) extends away from the inner surface (19) of the intake air duct (2).

5. The piston engine (1) according to claim 4, **characterised in that** the slot (15) extends at an angle (α) of at most 85°, typically at an angle (α) of 5 - 70°, away from the inner surface (19) of the intake air duct (2).

6. The piston engine (1) according to any of the preceding claims, **characterised in that** the width (w) of the slot (15) is at least 3 mm, typically 1-5 cm.

7. The piston engine (1) according to any of the preceding claims, **characterised in that** the intake air duct (2) is provided with liquid feeding means (10) for feeding liquid into the intake air duct (2), and that the liquid removal means (15) are arranged after the liquid feeding means (10) in the flow direction of the intake air.

8. The piston engine (1) according to any of claims 1-7, **characterised in that** an opening (21) of the slot (15) comprises a front edge (22) and a rear edge (23) located downstream from the front edge (22), and that the inner diameter of the intake air duct (2) at the location of the front edge (22) is equal or larger than that at the location of the rear edge (23).

## Patentansprüche

1. Kolbenmotor (1), umfassend einen Ansaugluftkanal (2), um Ansaugluft in Zylinder (3) des Motors (1) zu leiten, einen Ladeluftkühler (9), der mit dem Ansaugluftkanal (2) verbunden ist, wobei der Ansaugluftkanal (2) mit Flüssigkeitsbeseitigungsmitteln (15) zur Beseitigung von Flüssigkeit von einer Innenfläche (19) des Ansaugluftkanals (2) versehen ist, und wobei die Flüssigkeitsbeseitigungsmittel (15) in der Strömungsrichtung der Ansaugluft vor dem Ladeluftkühler (9) angeordnet sind, **dadurch gekennzeichnet, dass**
- die Flüssigkeitsbeseitigungsmittel einen Schlitz (15) umfassen, der in einer Wand (17) des Ansaugluftkanals (2) angeordnet ist,
- mit dem Schlitz (15) ein Ablauf (16) verbunden ist, durch welchen Ablauf (16) die Flüssigkeit von dem Schlitz (15) beseitigt werden kann, und
- der Ablauf (16) ein Ventil (18) umfasst, das so eingerichtet ist, dass es sich öffnet, wenn der Flüssigkeitspegel in dem Schlitz (15) oder in dem Ablauf (16) über einen vorherbestimmten Pegel steigt.

2. Kolbenmotor (1) nach Anspruch 1, **dadurch gekennzeichnet, dass** der Schlitz (15) in der Querrichtung des Ansaugluftkanals (2) länglich ist.

3. Kolbenmotor (1) nach einem der Ansprüche 1 oder 2, **dadurch gekennzeichnet, dass** sich der Schlitz (16) um den gesamten Umfang des Ansaugluftkanals (2) erstreckt.

4. Kolbenmotor (1) nach einem der vorhergehenden Ansprüche, **dadurch gekennzeichnet, dass** sich der Schlitz (15) von der Innenfläche (19) des Ansaugluftkanals (2) weg erstreckt.

5. Kolbenmotor (1) nach Anspruch 4, **dadurch gekennzeichnet, dass** sich der Schlitz (15) in einem Winkel (α) von höchstens 85 °, und typischerweise in einem Winkel (α) von 5 bis 70 °, von der Innenfläche (19) des Ansaugluftkanals (2) weg erstreckt.

6. Kolbenmotor (1) nach einem der vorhergehenden Ansprüche, **dadurch gekennzeichnet, dass** die Breite (w) des Schlitzes (15) wenigstens 3 mm und typischerweise 1 - 5 cm beträgt.

7. Kolbenmotor (1) nach einem der vorhergehenden Ansprüche, **dadurch gekennzeichnet, dass** der Ansaugluftkanal (2) mit Flüssigkeitszufuhrmitteln (10) zur Zufuhr von Flüssigkeit in den Ansaugluftkanal (2) versehen ist, und dass die Flüssigkeitsbeseitigungsmittel (15) in der Strömungsrichtung der Ansaugluft hinter dem Flüssigkeitszufuhrmittel (10) angeordnet sind.

8. Kolbenmotor (1) nach einem der Ansprüche 1 - 7, **dadurch gekennzeichnet, dass** eine Öffnung (21) des Schlitzes (15) eine Vorderkante (22) und eine Hinterkante (23), die sich stromabwärts von der Vorderkante (22) befindet, umfasst, und dass der Innendurchmesser des Ansaugluftkanals (2) an der Stelle der Vorderkante (22) gleich oder größer als jener an der Stelle der Hinterkante (23) ist.

## Revendications

1. Moteur à pistons (1) comprenant un conduit d'air d'admission (2) pour conduire l'air d'admission vers des cylindres (3) du moteur (1), un refroidisseur d'air de suralimentation (9) relié au conduit d'air d'admission (2), lequel conduit d'air d'admission (2) est doté d'un moyen de retrait de liquide (15) pour retirer du liquide d'une surface intérieure (19) du conduit d'air d'admission (2), et lequel moyen de retrait de liquide (15) est agencé avant le refroidisseur d'air de suralimentation (9) dans la direction d'écoulement de l'air d'admission, **caractérisé en ce que**
- le moyen de retrait de liquide comprend une fente (15) agencée dans une paroi (17) du conduit d'air d'admission (2),
- une évacuation (16) est raccordée à la fente (15), à travers laquelle évacuation (16), le liquide peut être retiré de la fente (15), et
- l'évacuation (16) comprend une soupape (18) qui est agencée pour s'ouvrir lorsque le niveau de liquide dans la fente (15) ou dans l'évacuation (16) s'élève au-dessus d'un niveau prédéterminé.

2. Moteur à pistons (1) selon la revendication 1, **caractérisé en ce que** la fente (15) est allongée dans le sens transversal du conduit d'air d'admission (2).

3. Moteur à pistons (1) selon la revendication 1 ou 2, **caractérisé en ce que** la fente (16) s'étend autour du périmètre entier du conduit d'air d'admission (2).

4. Moteur à pistons (1) selon l'une quelconque des revendications précédentes, **caractérisé en ce que** la fente (15) s'étend à distance de la surface intérieure (19) du conduit d'air d'admission (2).

5. Moteur à pistons (1) selon la revendication 4, **caractérisé en ce que** la fente (15) s'étend à un angle (α) d'au plus 85°, typiquement à un angle (α) de 5-70°, à distance de la surface intérieure (19) du conduit d'air d'admission (2).

6. Moteur à pistons (1) selon l'une quelconque des revendications précédentes, **caractérisé en ce que** la largeur (w) de la fente (15) est d'au moins 3 mm, typiquement de 1 - 5 cm.

7. Moteur à pistons (1) selon l'une quelconque des revendications précédentes, **caractérisé en ce que** le conduit d'air d'admission (2) est doté d'un moyen d'alimentation de liquide (10) pour alimenter du liquide dans le conduit d'air d'admission (2), et que le moyen de retrait de liquide (15) est agencé après le moyen d'alimentation de liquide (10) dans la direction d'écoulement de l'air d'admission.

8. Moteur à pistons (1) selon l'une quelconque des revendications 1 - 7, **caractérisé en ce qu'**une ouverture (21) de la fente (15) comprend un bord avant (22) et un bord arrière (23) situé en aval du bord avant (22), et que le diamètre intérieur du conduit d'air d'admission (2) à l'emplacement du bord avant (22) est égal à, ou plus grand que, celui de l'emplacement du bord arrière (23).
